Europäisches Patentamt

European Patent Office

Office européen des brevets

(19)

(11) **EP 0 647 604 B1**

(12) **EUROPÄISCHE PATENTSCHRIFT**

(45) Veröffentlichungstag und Bekanntmachung des Hinweises auf die Patenterteilung:
**17.03.1999 Patentblatt 1999/11**

(51) Int. Cl.$^6$: **C05F 17/00**

(21) Anmeldenummer: **94113723.4**

(22) Anmeldetag: **01.09.1994**

(54) **Verfahren zum Kompostieren von organischen Stoffen**

Organic matter composting process

Procédé de compostage de matériaux organiques

(84) Benannte Vertragsstaaten:
**AT BE CH DE DK ES FR GB GR IT LI LU NL SE**

(30) Priorität: **08.10.1993 DE 4334435**

(43) Veröffentlichungstag der Anmeldung:
**12.04.1995 Patentblatt 1995/15**

(60) Teilanmeldung:
**97102326.2 / 0 776 874**

(73) Patentinhaber:
**HERHOF UMWELTTECHNIK GmbH
D-35606 Solms-Niederbiel (DE)**

(72) Erfinder:
**Schnorr, Karl-Ernst, Dipl.-Ing,.
D-35633 Lahnau (DE)**

(74) Vertreter:
**Zinnecker, Armin, Dipl.-Ing. et al
Lorenz-Seidler-Gossel,
Widenmayerstrasse 23
80538 München (DE)**

(56) Entgegenhaltungen:
**EP-A- 0 028 194          EP-A- 0 458 136
DE-A- 3 829 018          DE-A- 4 107 340
US-A- 5 145 581**

Bemerkungen:
Teilanmeldung 97102326.2 eingereicht am 13/02/97.

**Beschreibung**

Die Erfindung betrifft ein Verfahren zum Kompostieren nach dem Oberbegriff des Anspruchs 1.

Ein derartiges Verfahren ist aus der DE-OS 41 07 340 bekannt. Nach diesem Verfahren werden organische Stoffe in einem geschlossenen Behälter unter Zwangsbelüftung kompostiert. Ein Teil der Abluft wird dem Rottegut erneut zugeführt. Ferner wird dem Rottegut reiner Sauerstoff zugeführt.

Aus der DE-OS 36 37 393 ist ein Verfahren bekannt, bei dem organische Stoffe unter Luftzuführung in einem geschlossenen Behälter mikrobiell abgebaut werden. Der geschlossene Behälter besitzt eine Bodenfläche, in der eine Vielzahl von Löchern angeordnet ist, die gleichmäßig über die Bodenfläche verteilt sind, so daß die auf der Bodenfläche zu einem Haufwerk aufgeschütteten organischen Stoffe gleichmäßig von der Zuluft durchströmt werden.

Aus der US-A-5145581 ist ein Verfahren zum Kompostieren von organischen Stoffen in einem geschlossenen Behälter unter Luftzuführung bekannt, wobei ein Teil der Abluft mit Frischluft oder Sauerstoff gemischt wird und dem Rottegut erneut zugeführt wird. Diese Abluft wird gekühlt, so daß der darin enthaltene Wasserdampf teilweise auskondensiert wird.

Die EP-A-458136 offenbart ein Verfahren zur Kompostierung von Abfällen, bei dem die Abfälle in einen Behälter eingebracht und unter Luftzuführung mikrobiell abgebaut werden. Die aus dem Rottegut austretende Abluft wird dem Rottegut erneut zugeführt. Der Rottevorgang wird derart durchgeführt, daß eine möglichst große $CO_2$-Menge pro Zeit oder eine möglichst große Wärmemenge pro Zeit erzeugt wird. Die Regelung des Verfahrens kann auf die pro Zeit erzeugte Wärmemenge ausgerichtet werden, also darauf, die gesamte durch den biologischen Abbau entstehende Wärmemenge pro Zeit zu maximieren. Diese Wärmemenge kann durch die Enthalpiedifferenz zwischen der Abluft und der Zuluft bestimmt werden. Nach der Vorveröffentlichung ist es ferner möglich, aus der Gewichtsabnahme des Rotteguts pro Zeit auf die pro Zeit erzeugte $CO_2$-Menge zu schließen.

Bei den vorbekannten Verfahren werden in dem Rottegut organische Stoffe mikrobiell abgebaut. Dabei werden die organischen Stoffe mit Sauerstoff (aerob) umgesetzt, wodurch Kohlendioxid $CO_2$ und Wasser $H_2O$ entstehen. Das Kohlendioxid und das Wasser werden mit der Abluft aus dem Rotte gut und dem geschlossenen Behälter heraustransportiert. Ferner wird auch das sogenannte freie Wasser mit der Abluft aus dem Rottegut herausbefördert, und zwar ebenfalls als Wasserdampf. Bei diesem freien Wasser handelt es sich zum einen um Oberflächenwasser, welches bereits beim Beladen des geschlossenen Behälters mit dem Rottegut in den geschlossenen Behälter hineingelangt, zum anderen um Zellwasser, also Wasser, das in den Zellen der organischen Stoffe von Anfang an als Wasser vorhanden ist.

Um das Wasser mit der Abluft aus dem geschlossenen Behälter heraustransportieren zu können, muß das in flüssiger Form vorliegende Wasser verdampft werden. Hierfür muß Energie aufgewendet werden. Diese Energie stammt aus dem Rotteprozeß; sie wird von den Mikroorganismen, die den Rotteprozeß bewirken, erzeugt.

Um den Frischluftbedarf herabzusetzen, ist es wünschenswert, das Verfahren im Umluftbetrieb zu betreiben, die Abluft also dem Rottegut erneut zuzuführen. Hierdurch kann sich allerdings der Feuchtigkeitsgehalt bzw. Wassergehalt in dem Rottegut bzw. in dem geschlossenen Behälter ändern. Dies kann zu Schwierigkeiten führen. Wenn das Klima in dem Rottegut zu trocken wird, kann die weitere Durchführung des Kompostierungsprozesses gefährdet sein. Wenn das Klima in dem Rottegut zu feucht bzw. zu naß wird, kann es vorkommen, daß eine einwandfreie Durchlüftung des Rottegutes nicht mehr gewährleisten ist. Die Effizienz des in dem Rottegut stattfindenden biologischen Stoffwechsels ist sehr wesentlich von der Gestaltung der Luftführungswege durch das Rottegut abhängig. Das Rottegut befindet sich als Schüttgut in dem geschlossenen Behälter. Wenn das Klima in dem Behälter zu feucht bzw. zu naß wird, kann sich die Konsistenz der Schüttung derart verschlechtern, daß eine gleichmäßige Durchströmung nicht mehr gewährleistet ist. Es können sogenannte Luftdurchbrüche entstehen. Um eine gleichmäßige Durchströmung zu erreichen, werden entsprechend der DE-OS 36 37 393 gleichmäßig über die Bodenfläche verteilte Löcher verwendet. Auch dann kann es bei einem zu feuchten bzw. zu nassem Klima jedoch zu einer Kanalbildung mit Luftdurchbruch kommen.

Aufgabe der Erfindung ist es, ein Verfahren der eingangs angegebenen Art vorzuschlagen, bei dem diese Nachteile nicht auftreten, das also ohne Schwierigkeiten durchgeführt werden kann.

Erfindungsgemäß wird diese Aufgabe durch die im kennzeichnenden Teil des Anspruchs 1 angegebenen Merkmale gelöst.

Das Verfahren wird derart gesteuert, daß die relative Feuchtigkeit in dem Rottegut zwischen einem unteren Grenzwert und einem oberen Grenzwert gehalten wird. Das Verfahren wird derart geführt, daß der $a_w$-Wert größer als 0,85 und kleiner als 1 ist. Hierbei wird der $a_w$-Wert vorzugsweise möglichst groß eingestellt. Er muß allerdings kleiner als 1 bleiben. Der $a_w$-Wert liefert ein Maß für die Feuchtigkeit. Er ist definiert als der Quotient aus dem Wasserdampfpartialdruck in der Luft und dem Wasserdampfpartialdruck in der Luft bei Sättigung.

Die Erfindung beruht auf der Erkenntnis, daß innerhalb des Rottegutes eine bestimmte relative Feuchtigkeit vorhanden sein muß, um das Feuchtigkeitsklima zu erhalten, das erforderlich ist, damit die Mikroorganismen die den Kompostierungsprozeß bewirkende Stoffwechseltätigkeit aufrechterhalten können.

Durch die Erfindung wird ein Verfahren geschaffen, mit dem die Vorteile der Abluftrückführung erreicht werden können, ohne daß deren Nachteile in Kauf genommen werden müssen.

Das erfindungsgemäße Verfahren ist insbesondere dann von Vorteil, wenn die Luft abgekühlt wird, bevor sie erneut dem Rottegut zugeführt wird. Da sich die Luft beim Durchströmen des Rottegutes erwärmt, ist es vorteilhaft, wenn sie abgekühlt wird, bevor sie erneut dem Rottegut zugeführt wird. Bei dieser Abkühlung kann allerdings die Feuchtigkeit auskondensieren, die aus dem Rottegut in die Abluft gelangt ist. Dabei kann es vorkommen, daß dem Rottegut zuviel Feuchtigkeit entzogen wird, so daß das Klima in dem Rottegut zu trocken wird. Um dem zu begegnen, könnte man der dem Rottegut zugeführten Luft (Frischluft oder Umluft) Feuchtigkeit beimischen. Dies ist im allgemeinen jedoch nicht erwünscht, da damit ein gewisser Aufwand verbunden ist. Nachteilhaft ist ferner, daß die Luft nur bis zur Sättigung Wasser aufnehmen kann.

Hiervon ausgehend wird erfindungsgemäß vorgeschlagen, das Verfahren derart zu steuern, daß die relative Feuchtigkeit in dem Rottegut zwischen einem unteren Grenzwert und einem oberen Grenzwert gehalten wird. Dies kann insbesondere dadurch geschehen, daS die Menge der Feuchtigkeit, die der Abluft entzogen wird, entsprechend gesteuert wird. Es ist möglich, im Umluftbetrieb die Feuchte der Zuluft durch Kühlung der Luft an der Sättigungslinie zu regeln.

Vorteilhafte Weiterbildungen sind in den Unteransprüchen beschrieben.

Nach dem Abbau der biologisch leicht abbaubaren Stoffe wird das Verfahren vorzugsweise derart geführt, daß der $a_w$-Wert in dem Rottegut größer als 0,65 und kleiner als 0,85 ist. Dann wird in dem Rottegut eine Hygienisierung durchgeführt. Der $a_w$-Wert muß größer als 0,65 sein, da anderenfalls der in diesem Fall gewünschte Stoffwechsel bei Pilzen nicht stattfinden kann. Er muß kleiner als 0,85 sein, um zu verhindern, daß Bakterien arbeiten können.

Vorzugsweise wird zumindest ein Teil der Abluft gekühlt und der darin enthaltene Wasserdampf zumindest zum Teil auskondensiert. Die Kühlung der Abluft erfolgt vorzugsweise in einem Wärmetauscher, beispielsweise in einem Luft-Luft-Wärmetauscher, um die bei der Kondensation frei werdende Wärme zu nutzen. Diese Wärme kann (direkt oder indirekt) auf die Zuluft (Frischluft) übertragen werden.

Der Zuluft kann reiner Sauerstoff beigemischt werden. Statt dessen oder zusätzlich kann der Zuluft auch Frischluft beigemischt werden.

Eine weitere vorteilhafte Weiterbildung ist dadurch gekennzeichnet, daß die Menge der pro Zeiteinheit zugeführten Luft derart eingestellt wird, daß die relative Feuchtigkeit in dem Rottegut innerhalb der im Anspruch 1 und gegebenenfalls im Anspruch 2 angegebenen Grenzwerte gehalten wird. Erforderlichenfalls können dabei die Temperatur und/oder die relative Feuchtigkeit der Zuluft berücksichtigt werden. Die Einstellung der relativen Feuchtigkeit in dem Rottegut erfolgt also durch die pro Zeiteinheit zugeführte Luft bzw. durch die Gebläseleistung. Die Menge der pro Zeiteinheit zugeführten Luft kann aus der Strömungsgeschwindigkeit v und der Querschnittsfläche A nach der bekannten Formel

$$V/t = A \times v$$

bestimmt werden.

Nach einer weiteren vorteilhaften Weiterbildung wird die Enthalpie der Zuluft derart eingestellt, daß die relative Feuchtigkeit in dem Rottegut innerhalb der im Anspruch 1 und gegebenenfalls im Anspruch 2 angegebenen Grenzwerte gehalten wird. Die Einstellung der relativen Feuchtigkeit in dem Rottegut erfolgt also über die Enthalpie der Zuluft, die nach der Formel

$$E = Q + p \times V$$

bestimmt werden kann mit Q = Wärmemenge, p = Druck und V = Volumen.

Besonders vorteilhaft ist es, wenn das Verfahren derart durchgeführt bzw. gesteuert bzw. geregelt wird, daß die relative Feuchtigkeit in dem Rottegut auf einem konstanten Wert gehalten wird.

Eine weitere vorteilhafte Weiterbildung ist dadurch gekennzeichnet, daß das Verhältnis zwischen der pro Zeiteinheit dem Rottegut erneut zugeführten Umluftmenge und der pro Zeiteinheit dem Rottegut zugeführten Frischluftmenge und/oder der pro Zeiteinheit dem Rottegut zugeführten Menge reinen Sauerstoffs größer als 1 ist und vorzugsweise zwischen 6 und 28 liegt.

Vorzugsweise wird der Abluft vor ihrer (völligen oder teilweisen) Rückführung in das Rottegut das in der Abluft enthaltene $CO_2$ ganz oder teilweise entzogen.

Eine vorteilhafte Weiterbildung der Erfindung betrifft ein Verfahren zur Ermittlung der Energie (thermische Energie, Enthalpie), die bei der Kompostierung von organischen Stoffen (Rottegut) in einem geschlossenen Behälter unter Zwangsbelüftung mikrobiologisch erzeugt wird.

Auf der Grundlage der Kenntnis dieser Energie kann das Kompostierungsverfahren gesteuert und/oder geregelt werden.

Gemäß der vorteilhaften Weiterbildung wird ein derartiges Verfahren zur Ermittlung der bei der Kompostierung erzeugten Energie dadurch geschaffen, daß die Menge des Wassers ermittelt wird, das bei der Kompostierung mikrobiologisch gebildet wird.

Die bei der Kompostierung erzeugte Energie kann laufend ermittelt werden und zur Steuerung und/oder Regelung des Kompostierungsverfahrens verwendet werden.

Die vorteilhafte Weiterbildung beruht auf folgenden Erkenntnissen: Die bei dem mikrobiologischen Abbau organischer Substanz in dem Rottegut entstehende Energie stammt ausschließlich aus der biochemischen Knallgasreaktion, also daraus, daß Wasserstoff und Sauerstoff zu Wasser verbunden werden. Durch die biochemische Knallgasreaktion wird zum einen Trockensubstanz abgebaut, d.h. in Wasser verwandelt, zum anderen wird Energie erzeugt. Die Masse der abgebauten Trockensubstanz ist dabei genauso groß wie die Masse des im Behälter erzeugten Wassers. Die Menge der erzeugten Energie kann aus der Masse des erzeugten Wassers (und damit aus der Masse der abgebauten Trockensubstanz) ermittelt werden (und zwar aus der verfügbaren Wasserbildungsenergie von 2.905,6 kcal/kg $H_2O$). Diese erzeugte Energie wird ausschließlich dazu verwendet, Wasser (und zwar sowohl Wasser, das durch die biologische Knallgasreaktion erzeugt wurde, als auch freies Wasser) im Rottegut zu verdampfen. Damit liefert die aus dem Rottegut mit der Abluft heraustransportierte, als Wasserdampf vorliegende Wassermenge ein Maß für die in dem Rottegut erzeugte Energie. Die aus dem Rottegut mit der Abluft herausgeführte Wassermenge ist wiederum genauso groß wie die aus der Abluft auskondensierte Wassermenge. Im Endergebnis kann damit aus der Energie des aus der Abluft auskondensierten Wassers auf die in dem Rottegut biologisch erzeugte Energie geschlossen werden.

Dieser Zusammenhang kann für die Steuerung bzw. Regelung des Rottevorgangs verwendet werden.

Eine weitere vorteilhafte Weiterbildung betrifft ein Verfahren zur Ermittlung der Menge des Wassers, das bei der Kompostierung von organischen Stoffen (Rottegut) in einem geschlossenen Behälter unter Zwangsbelüftung mikrobiologisch gebildet wird. Dieses Wasser entsteht aus der "Tätigkeit" der Mikroorganismen, und zwar - wie bereits ausgeführt - durch die sogenannte biologische Knallgasreaktion.

Gemäß dieser vorteilhaften Weiterbildung wird der Wassergehalt und die Enthalpie in der Zuluft und in der Abluft gemessen bzw. bestimmt und wird daraus die Menge des in dem Behälter mikrobiologisch gebildeten Wassers ermittelt. Bei der Zuluft handelt es sich dabei um die in den Behälter eingeführte Luft, bei der Abluft um die aus dem Behälter herausgeführte Luft.

Nach einer weiteren vorteilhaften Weiterbildung wird die Abnahme des Gewichts des Rotteguts gemessen bzw. bestimmt. Um die Gewichtsabnahme des Rotteguts zu bestimmen, kann das Gewicht des Rotteguts in bestimmten Zeitabständen oder kontinuierlich gemessen werden. Aus der Differenz von zwei in einem Zeitabstand durchgeführten Gewichtsmessungen kann auf die Gewichtsabnahme des Rotteguts geschlossen werden. Dabei ist es nicht erforderlich, daß (Netto-) Gewicht des Rotteguts zu messen. Da es nur auf die Gewichtsabnahme des Rotteguts ankommt, kann auch das (Brutto-) Gewicht des Rotteguts und weiterer Anlagenteile gemessen werden.

Eine weitere vorteilhafte Weiterbildung ist dadurch gekennzeichnet, daß die Kühlleistung und/oder die Gebläseleistung so eingestellt werden, daß pro Zeiteinheit eine bestimmte Menge Kondensat erzeugt wird. Vorzugsweise wird die Abluft in einem Wärmetauscher gekühlt. Dann werden die Kühlleistung des Wärmetauschers und/oder die Gebläseleistung des die Zwangsbelüftung des Behälters durchführenden Gebläses so eingestellt, daß pro Zeiteinheit eine bestimmte Menge Kondensat in dem Wärmetauscher erzeugt wird.

Vorzugsweise wird die zu erzeugende Kondensatmenge pro Zeiteinheit aus einer vorgegebenen Abbaurate ermittelt, wobei diese Abbaurate vorzugsweise 20 % beträgt.

Ausführungsbeispiele der Erfindung werden nachstehend anhand der beigefügten Zeichnung im einzelnen erläutert. In der Zeichnung zeigt

Fig. 1 einen geschlossenen Behälter zur Durchführung des Verfahrens in einer schematischen Darstellung,

Fig. 2 den Verlauf der Masse des Rottegutes und der Masse der darin enthaltenen Trockensubstanz über der Zeit in einem Beispielsfall,

Fig. 3 ein T-S-Diagramm der Wärmeaufnahme der Luft in dem Rottegut und

Fig. 4 ein T-S-Diagramm der Wärmeabgabe der Abluft außerhalb des Rottegutes.

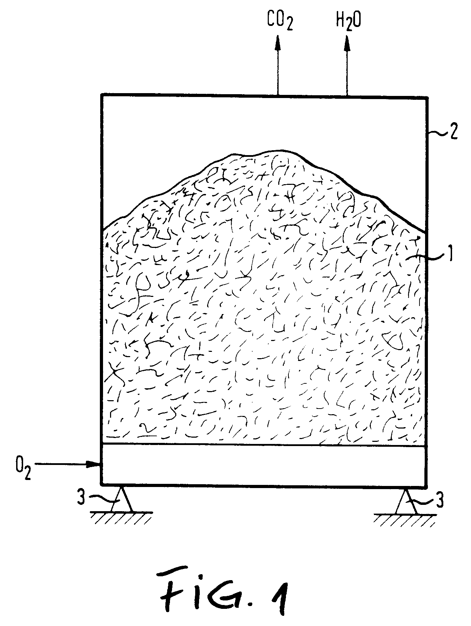

Wie in Fig. 1 schematisch gezeigt, wird dem Rottegut 1, das sich in dem geschlossenen Behälter 2 befindet, Sauerstoff $O_2$ enthaltende Zuluft zugeführt. Aus dem geschlossenen Behälter wird Kohlendioxid $CO_2$ und Wasser $H_2O$ enthaltende Abluft abgeführt. Der geschlossene Behälter 2 ruht auf Meßaufnehmern 3, die eine Gewichtsmessung und damit eine Messung der Masse des Rottegutes durchführen können. Aus der Messung der Masse des Rottegutes kann die pro Zeiteinheit auftretende Abnahme der Masse des Rottegutes bestimmt werden. Die Massenabnahme kann auch dann bestimmt werden, wenn nicht die (Netto-) Masse des Rottegutes gemessen wird, sondern eine auch die Masse weiterer Anlagenteile einschließende (Brutto-) Masse, da es nur auf Massedifferenzen ankommt.

Das Rottegut 1 wird zunächst in den Behälter 2 eingebracht. Anschließend wird der Behälter geschlossen und das Rottegut wird unter Luftzuführung mikrobiell abgebaut.

1. Beispiel:

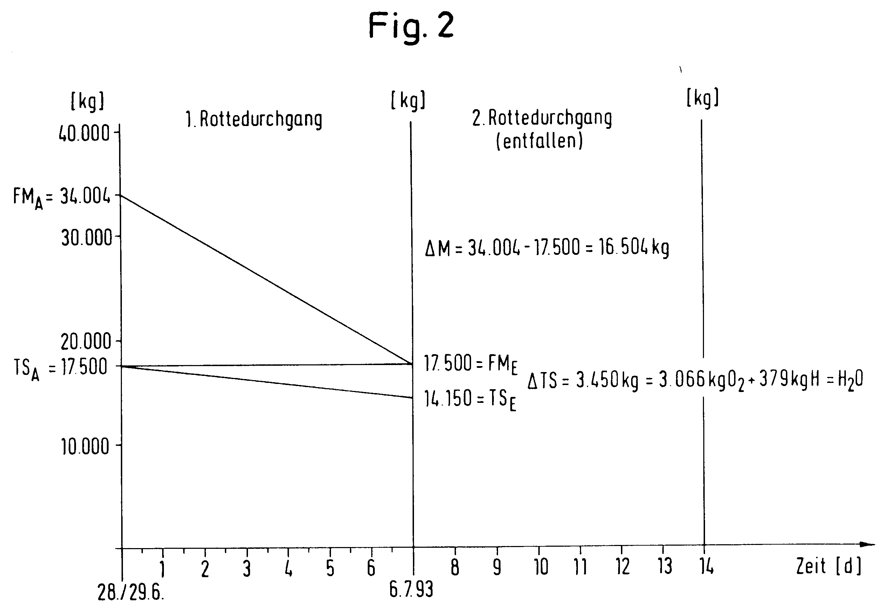

In einem praktisch durchgeführten Beispiel haben sich dabei die in Fig. 2 graphisch dargestellten Verhältnisse ergeben. In den geschlossen Behälter wurden organische Stoffe, nämlich eine Frischmasse am Anfang $FM_A$, von 34.004 kg eingebracht. Anhand einer Probe wurde die relative Feuchtigkeit der Frischmasse zu 48,5 % ermittelt. Die Trockenmasse (Trockensubstanz) $TS_A$ der Frischmasse am Anfang betrug dementsprechend 51,5 % der Frischmasse am Anfang, also 51,5 % von 34.004 kg, demnach 17.500 kg.

Der Rottevorgang wurde eine Woche, also sieben Tage bzw. 168 Stunden, durchgeführt. Nach dieser Zeit betrug die Masse des Rotteguts, also die Frischmasse am Ende $FM_E$ 17.500 kg. Erneut wurde die relative Feuchtigkeit gemessen. Sie betrug 19,1 %. Damit betrug die Trockenmasse am Ende $TS_E$ 18,9 % von 17.500 kg, also 14.150 kg.

Der Massenunterschied $\Delta M$ errechnet sich daraus zu 34.004 - 17.500 = 16.504 kg. Der Unterschied in der Trockenmasse errechnet sich zu $\Delta TS$ = 17.500 - 14.150 = 3.450 kg. Aus Fig. 2 ist ersichtlich, daß der Massenabbau linear (also längs einer Geraden) verläuft.

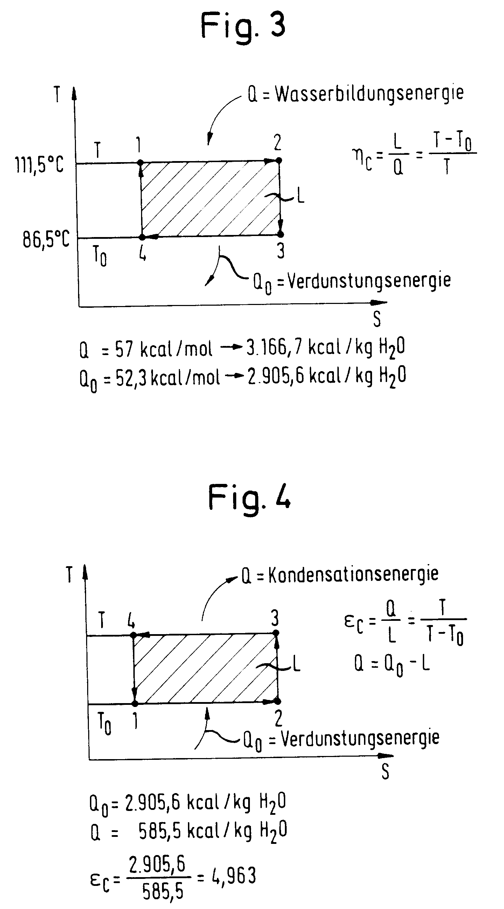

a) Die Energieerzeugung durch den Rotteprozeß erfolgt im Wege der sogenannten biochemischen Knallgasreaktion (Prof. Dr. Hans G. Schlegel, Dr. Karin Schmidt, Allgemeine Mikrobiologie, 5. Aufl., Georg Thieme Verlag, Stuttgart, New York, 1981, Seite 232). Die Energieerzeugung durch diese biochemische Knallgasreaktion und die Abgabe der Energie an die Luft in dem geschlossenen Behälter ist in der Fig. 3 schematisch dargestellt. Die Wasserbildungsenergie Q aus der biochemischen Knallgasreaktion beträgt 57 kcal/mol bzw. 3.166,7 kcal/kg $H_2O$. Da diese Energie von lebenden Zellen geliefert wird, steht sie nicht vollständig zur Verfügung; nur die verfügbare Wasserbildungsenergie 52,3 kcal/mol bzw. 2.905,6 kcal/kg $H_2O$ wird von dem Rottegut auf die Luft übertragen, und zwar als Verdunstungsenergie $Q_0$. Dies ergibt einen thermischen Wirkungsgrad $\eta_C$ von $(Q - Q_0)/Q = (57 - 52,3)/57 = 4,7/57 = 0,08246$, gleichbedeutend mit einem sehr geringen Verlust an mikrobieller Wasserbildungsenthalpie.

Nimmt man für die Temperatur T, bei der die Wasserbildungsenergie Q aus der biochemischen Knallgasreaktion entsteht, 111,5° C an, so ergibt sich nach Fig. 3 aus Q = 57 kcal/mol und $Q_0$ = 52,3 kcal/mol eine Temperatur $T_0$ für die Temperatur bei der Abgabe der Verdunstungsenergie vom Rottegut auf die Luft von 86,5° C.

b) Die mit Kohlendioxid $CO_2$ und Wasserdampf $H_2O$ beladene Abluft wird außerhalb des geschlossenen Behälters abgekühlt, beispielsweise in einem Wärmetauscher, vorzugsweise einem Luft-Luft-Wärmetauscher oder einem Luft-Wasser-Wärmetauscher. Die dort stattfindenden Vorgänge sind in Fig. 4 schematisch dargestellt. Bei der Temperatur $T_0$ wird die Verdunstungsenergie $Q_0$ zugeführt. Diese Verdunstungsenergie $Q_0$ beträgt - wie oben ausgeführt - 52,3 kcal/mol bzw. 2.905,6 kcal/kg $H_2O$. Es sei angenommen, daß die Kondensation in dem Wärmetauscher bei einer Temperatur von 21° C erfolgt. Dann betragt die Kondensationsenergie Q von Wasser 585,5 kcal/kg $H_2O$. Die Leistungsziffer $\varepsilon_C$ errechnet sich damit zu $Q_0/Q = 2.905,6/585,5 = 4,963$. Dies ist eine verhältnismäßig hohe Leistungsziffer.

Der biothermische Wirkungsgrad $\eta_S$ kann wie folgt bestimmt werden:

$$\eta_S = 1/\varepsilon_C = 585,5/2.905,6 = 0,2015$$

c) Die oben bereits angegebene, biologisch erreichbare Maximaltemperatur von $T_M$ = 111,5° C (Temperatur T in Fig. 3) kann wie folgt berechnet werden:

Wenn Luft 1 kg $H_2O$ aufnehmen soll, beträgt die Temperatur ausweislich des i-x-Diagramms $T_S$ = 86,5° C bei Sättigung. Dies entspricht $T_S$ = 273 + 86,5 = 359,5° K.

Die im Mikroorganismus geleistete Arbeit kann wie folgt bestimmt werden: Die Wasserbildungsenergie Q beträgt (siehe oben) 3.166,7 kcal/kg $H_2O$. Hiervon benötigt der Mikroorganismus selbst die Energie L = 261,1 kcal/kg $H_2O$. Damit verbleibt als Verdunstungsenergie $Q_0$ die Differenz $Q - L = 3.166,7 - 261,1 = 2.905,6$ kcal/kg $H_2O$. Dies ergibt, wie oben bereits ausgeführt, einen Wirkungsgrad $\eta_C$ = 0,08246. Der durch die innere Arbeit im Mikroorganismus entstehende Temperaturabfall $\Delta T$ kann damit mit $T_0$ = 273° K wie folgt berechnet werden:

$$\Delta T = \frac{T_0}{1 - \eta_C} - T_0 = \frac{273}{1 - 0,08246} - 273 = 298 - 273 = 25° K$$

Daraus errechnet sich die theoretisch durch die biochemische Knallgasreaktion maximal erreichbare Temperatur $T_M$ wie folgt:

$$T_M = T_S + \Delta T = 359{,}5 + 25 = 384{,}5° K$$

Dies entspricht einer Temperatur von $T_M = 111{,}5°$ C.

$T_S = 86{,}5°$ C ist die maximale Temperatur, die in der Praxis nach außen vom Mikroorganismus abgegeben werden kann.

2. Beispiel:

30.000 kg organische Stoffe (Rottegut) werden in den geschlossenen Behälter eingebracht. Die relative Feuchtigkeit dieses Rottegutes beträgt 50 %. Dies bedeutet, däß sich in dem geschlossenen Behälter 15.000 kg Wasser $H_2O$ und 15.000 Trockensubstanz befinden.

Vorgegeben wird eine Abbaurate von 20 %. Dies bedeutet, daß 20 %, also 3.000 kg, der 15.000 kg Trockensubstanz abgebaut werden sollen. Die Verlustmenge an Trockensubstanz beträgt also 3.000 kg.

Da der Trockensubstanzverlust, also der Masseverlust an Trockensubstanz, genauso groß ist wie die Masse des durch die biochemische Knallgasreaktion im Behälter erzeugten Wassers, kann über die massenbezogene verfügbare Wasserbildungsenergie, die genauso groß ist wie die massenbezogene Verdunstungsenergie $Q_0 = 2.905{,}6$ kcal/kg $H_2O$, aus der Verlustmenge an Trockensubstanz auf die Verdunstungsenergie $Q_0$ geschlossen werden. Einem Verlust von 1 kg Trockensubstanz entspricht eine Verdunstungsenergie von 2.905,6 kcal. Bei einem Trockensubstanz-Verlust von 3.000 kg entsteht also in dem Rottegut eine Verdunstungsenergie von 3.000 x 2.905,6 = 8.716.500 kcal.

Diese im Rottegut entstehende Energiemenge wird dazu verwendet, Wasser zu verdampfen, welches mit der Abluft aus dem geschlossenen Behälter herausgeführt wird und welches dann außerhalb des Behälters kondensiert wird. Diese Kondensation findet bei 21° C statt. Aus der Energiemenge von 8.716.500 kcal und der Kondensationsenergie bei 21° C von 585,5 kcal/kg kann die Kondensatmenge wie folgt errechnet werden: Kondensatzmenge = Energie/Kondensationsenergie = 8.716.500 kcal/(585,5 kcal/kg) = 14.887 kg $H_2O$.

Der Rottevorgang dauert sieben Tage, also 168 Stunden. Damit müssen pro Stunde 14.887/168 = 88,6 kg Kondensatwasser erzeugt werden.

Die Kühltemperatur, also die Ausgangstemperatur des Wärmetauschers, und/oder die pro Zeiteinheit zugeführte Luftmenge (also die Gebläseleistung) werden so eingestellt, daß pro Stunde 88,6 kg Kondensat anfallen.

Durch die Erfindung wird ein Verfahren zur Steuerung des Wassergehaltes von Kompost in Kompostierungsbehältern geschaffen. Das Verfahren wird auf der Grundlage des Carnot'schen Kreisprozesses durch Zustandsänderung der Luft, die zum Zweck des aeroben biologischen Abbaus durch das Rottegemisch hindurchgeführt wird, nach dem i-x-Diagramm gesteuert. Bei dem Durchtritt der Luft durch das Rottegut wird eine Zustandsänderung dieser Luft bei konstanter Temperatur angestrebt, wobei die Luft bis zur Sättigung Feuchtigkeit aufnehmen kann. Dieser Vorgang vollzieht sich in unendlich kleinen Teilschritten, da die Luft beim Durchströmen eines porenhaltigen feuchten Gemisches nach Eintritt in einen neuen (Mikroporen-) Raum isotherm bis zur Sättigung aus der Umgebung Feuchtigkeit aufnimmt, wenn ihr Wärme aus einer mikrobiologischen Reaktion zugeführt wird. Da in dem Rottegut eine mikrobiologische Reaktion stattfindet, wird die durchströmende Luft unter Wärmezufuhr, aber ohne Temperaturerhöhung bis zur Sättigung mit Wasser angereichert.

Wenn keine mikrobiologische Reaktion (mehr) stattfindet oder wenn sich das Ausmaß der mikrobiologischen Reaktion stark vermindert, wie dies beispielsweise dann der Fall ist, wenn die biologisch leicht abbaubare Substanz abgebaut worden ist, kann der Luft keine Wärme mehr zugeführt werden bzw. wird der Luft nur noch wesentlich weniger Wärme zugeführt. Gleichwohl nimmt die Luft nach wie vor noch Wasser auf. Hierdurch trocknet das Rottegemisch aus. Als Folge kühlt sich die Luft ab. Ferner findet eine Rückkühlung des Rottegemisches statt. Anhand der Austrocknung des Rottegemisches, die sich in einer Kühlung bzw. weniger starken Erwärmung der Luft auswirkt, kann also festgestellt werden, daß die biologisch leicht abbaubare Substanz abgebaut worden ist. Dann ist die Zustandsänderung der Luft im Rottegemisch adiabat oder doch zumindest annähernd adiabat, so daß das Rottegemisch kühlt und austrocknet. Da kein biologischer Abbau mehr stattfindet bzw. nur noch ein stark verminderter Abbau, kommt auch die biologische Knallgasreaktion vollständig oder doch zumindest sehr stark zum Erliegen, so daß sich kein Wasser mehr bildet.

Die Luft, die das Rottegut durchströmt hat und die dabei Wasser aufgenommen hat, wird außerhalb des Rottegemisches entlang der Sättigungslinie abgekühlt, bis zu einer Temperatur, die der gewünschten Feuchtigkeit entspricht. Diese derart abgekühlte und getrocknete Luft wird nun dem Rottegemisch wieder zugeführt. Der verbrauchte Sauerstoff kann dabei ersetzt werden durch reinen Sauerstoff oder durch Umgebungsluft (Frischluft). Das durch Abkühlung entstehende Kondensatwasser kann aus dem Kreislauf kontrolliert ausgeschleust werden. Ebenso kann die überschüssige Gasmenge (ein Gemisch aus $CO_2$, Luft und sonstigen Stoffwechselprodukten) aus dem Kreislauf kontrolliert ausgeschleust werden.

Die kondensierte Wassermenge entspricht der infolge mikrobiologischer Reaktion (sogenannte "biochemische Knallgasreaktion") verdunsteten Wassermenge (entsprechend dem Carnot'schen Kreisprozeß), wobei berücksichtigt werden muß, daß als freie Verdunstungswärme nur 52,3 kcal/mol $H_2O$ von 56,8 kcal/mol $H_2O$-Bildungsenthalpie zur Verfügung stehen, da die Differenz für den mikrobiellen Betriebsstoffwechsel verbraucht wird. Die thermische Energie zur Verdunstung von Wasser stammt bei dem aeroben mikrobiellen Stoffwechsel einzig und allein aus der chemischen Reaktion zwischen Sauerstoff und Wasserstoff, nämlich aus dem Glukoseabbau als letztem Schritt der Rückwandlung organischer Substanz. Dies bedeutet, daß über die Zustandsänderung der Luft hinsichtlich ihres Wassergehalts und ihrer Enthalpie die Menge des mikrobiologisch gebildeten Wassers bestimmt werden kann. Da die Kondensation des Wasserdampfes außerhalb des Kompostierungsbehälters erfolgt, ist die Gewichtsabnahme im Behälter gleich der kondensierten Wassermenge.

Zur Bestimmung der Luftmenge und des Luftzustandes bei Wiedereintritt der Luft in das Rottegemisch ist es erforderlich, den Wassergehalt des Rottegemisches am Anfang zu kennen und den gewünschten Endwassergehalt festzulegen. Die erforderliche Luftmenge orientiert sich an der isotherm verlaufenden Wasseraufnahme der Luft bis zur Sättigung in Abhängigkeit von der Umgebungstemperatur im Porenklima des Rottegutes. Zur Aufrechterhaltung eines optimalen Porenklimas wird das mikrobiell gebildete Wasser und das die relative Materialfeuchte erhöhende freie Wasser mit der Luft abgeführt und danach aus der Umluft auskondensiert. Die Umluft wird dann wieder in dem Zustand (Temperatur, Feuchte, $O_2$-Gehalt) in das Rottegut zurückgeführt, der einen optimalen biologischen Abbau der organischen Substanz gewährleistet. Die zugeführte frische Sauerstoffmenge und die damit verbundene Ableitung verbrauchter Luft richtet sich nach dem Sauerstoffverbrauch der Mikroorganismen. Dadurch, daß eine größere Luftmenge im Umlauf gehalten wird als zur Sauerstoffversorgung eigentlich erforderlich ist, wird das Porenvolumen durch einen geringen Überdruck aufrechterhalten.

Nach einer vorteilhaften Weiterbildung des Verfahrens kann durch die Rücknahme der Kühlwirkung auf die Umluft die Temperatur im Rottegut auf 50° bis 85° C angehoben werden, um dadurch eine sichere Hygienisierung, also eine Abtötung vegetativer pathogener Keime, durchzuführen.

**Patentansprüche**

1. Verfahren zum Kompostieren, bei dem das Rottegut in einem geschlossenen Behälter unter Luftzuführung biologisch abgebaut wird, wobei zumindest ein Teil der Abluft dem Rottegut erneut zugeführt wird,

   dadurch gekennzeichnet,

   daß das Verfahren derart gesteuert wird, daß die relative Feuchtigkeit in dem Rottegut zwischen einem unteren Grenzwert und einem oberen Grenzwert gehalten wird,

   wobei der $a_W$-Wert (= Wasserdampfpartialdruck in der Luft/Wasserdampfpartialdruck in der Luft bei Sättigung) in dem Rottegut während des Abbaus der biologisch leicht abbaubaren Stoffe größer als 0,85 und kleiner als 1 ist.

2. Verfahren nach Anspruch 1, dadurch gekennzeichnet, daß der $a_W$-Wert nach dem Abbau der biologisch leicht abbaubaren Stoffe größer als 0,65 und kleiner als 0,85 ist.

3. Verfahren nach Anspruch 1 oder 2, dadurch gekennzeichnet, daß die Abluft gekühlt und der darin enthaltene Wasserdampf zumindest zum Teil auskondensiert wird.

4. Verfahren nach einem der vorhergehenden Ansprüche, dadurch gekennzeichnet, daß der Zuluft reiner Sauerstoff beigemischt wird.

5. Verfahren nach einem der vorhergehenden Ansprüche, dadurch gekennzeichnet, daß der Zuluft Frischluft beigemischt wird.

6. Verfahren nach einem der vorhergehenden Ansprüche, dadurch gekennzeichnet, daß die Menge der pro Zeiteinheit zugeführten Luft derart eingestellt wird, daß die relative Feuchtigkeit in dem Rottegut innerhalb der im Anspruch 1 und gegebenenfalls im Anspruch 2 angegebenen Grenzwerte gehalten wird.

7. Verfahren nach einem der vorhergehenden Ansprüche, dadurch gekennzeichnet, daß die Enthalpie der Zuluft derart eingestellt wird, daß die relative Feuchtigkeit in dem Rottegut innerhalb der im Anspruch 1 und gegebenenfalls im Anspruch 2 angegebenen Grenzwerte gehalten wird.

**8.** Verfahren nach einem der vorhergehenden Ansprüche, dadurch gekennzeichnet, daß der $a_W$-Wert innerhalb der angegebenen Grenzen möglichst groß eingestellt wird.

**9.** Verfahren nach einem der vorhergehenden Ansprüche, dadurch gekennzeichnet, daß die relative Feuchtigkeit in dem Rottegut auf einem konstanten Wert gehalten wird.

**10.** Verfahren nach einem der vorhergehenden Ansprüche, dadurch gekennzeichnet, daß das Verhältnis zwischen der pro Zeiteinheit dem Rottegut erneut zugeführten Umluftmenge und der pro Zeiteinheit dem Rottegut zugeführten Frischluftmenge und/oder der pro Zeiteinheit dem Rottegut zugeführten Menge reinen Sauerstoffs größer als 1 ist und vorzugsweise zwischen 6 und 28 liegt.

**11.** Verfahren nach einem der vorhergehenden Ansprüche, dadurch gekennzeichnet, daß der Abluft vor ihrer völligen oder teilweisen Rückführung in das Rottegut das darin enthaltene $CO_2$ ganz oder teilweise entzogen wird.

**12.** Verfahren nach einem der vorhergehenden Ansprüche, dadurch gekennzeichnet, daß die Menge des Wassers ermittelt wird, das bei der Kompostierung mikrobiologisch gebildet wird, und daß die so bestimmte Wassermenge für die Steuerung und/oder Regelung des Kompostierungsverfahrens verwendet wird.

**13.** Verfahren nach Anspruch 12, dadurch gekennzeichnet, daß der Wassergehalt und die Enthalpie in der Zuluft und in der Abluft gemessen bzw. bestimmt werden und daß daraus die Menge des in dem Behälter mikrobiologisch gebildeten Wassers ermittelt wird.

**14.** Verfahren nach Anspruch 12 oder 13, dadurch gekennzeichnet, daß die Abnahme des Gewichts des Rotteguts gemessen bzw. bestimmt wird.

**15.** Verfahren nach einem der Ansprüche 3 bis 14, dadurch gekennzeichnet, daß die Kühlleistung und/oder die Gebläseleistung so eingestellt werden, daß pro Zeiteinheit eine bestimmte Menge Kondensat erzeugt wird.

**16.** Verfahren nach Anspruch 15, dadurch gekennzeichnet, daß die zu erzeugende Kondensatmenge pro Zeiteinheit aus einer vorgegebenen Abbaurate von beispielsweise 20 % ermittelt wird.

**Claims**

**1.** Composting process in which the organic matter is biologically degraded in a closed container with an aeration supply, with at least part of the waste air being returned to said organic matter,
**characterised in that**

the process is controlled such that the relative humidity in the organic matter is maintained between a lower limit value and an upper limit value,

with the $a_W$ value (= water vapour partial pressure in the air/water vapour partial pressure in the air at saturation) in the organic matter during decomposition of the readily biologically degradable substances being greater than 0.85 and smaller than 1.

**2.** Process according to Claim 1, characterised in that the $a_W$ value following decomposition of the readily biologically degradable substances is greater than 0.65 and smaller than 0.85.

**3.** Process according to Claim 1 or 2, characterised in that the waste air is cooled and the water vapour contained therein is at least partially condensed out.

**4.** Process according to one of the preceding Claims, characterised in that pure oxygen is admixed to the aeration supply.

**5.** Process according to one of the preceding Claims, characterised in that fresh air is admixed with the aeration supply.

**6.** Process according to one of the preceding Claims, characterised in that the volume of air supplied per unit time is adjusted such that the relative humidity in the organic matter is maintained within the limit values indicated in Claim 1 and, where appropriate, in Claim 2.

7. Process according to one of the preceding Claims, characterised in that the enthalpy of the air supplied is adjusted such that the relative humidity in the organic matter is maintained within the limits indicated in Claim 1 and, where appropriate, in Claim 2.

8. Process according to one of the preceding Claims, characterised in that the $a_W$ value is adjusted to the maximum possible level within the specified limits.

9. Process according to one of the preceding Claims, characterised in that the relative humidity in the organic matter is kept at a constant value.

10. Process according to one of the preceding Claims, characterised in that the ratio between the recycled circulating air flow supplied per unit time to the organic matter, and the fresh air flow supplied per unit time to the organic matter and/or pure oxygen flow supplied to the organic matter per unit time is greater than 1 and preferably lies between 6 and 28.

11. Process according to one of the preceding Claims, characterised in that the $CO_2$ contained in the waste air is completely or partially removed prior to the complete or partial recirculation of said waste air to the organic matter.

12. Process according to one of the preceding Claims, characterised in that the volume of water microbiologically formed during composting is determined and that the water volume thus ascertained is used for open-loop and/or closed-loop control of the composting process.

13. Process according to Claim 12, characterised in that the water content and the enthalpy in the aeration supply and in the waste air are measured or otherwise determined, and that from the result is derived the volume of water microbiologically formed in the container.

14. Process according to Claim 12 or 13, characterised in that the reduction in the weight of the organic matter is measured or otherwise determined.

15. Process according to one of Claims 3 to 14, characterised in that the cooling capacity and/or the fan capacity are adjusted so that a certain quantity of condensate is generated per unit time.

16. Process according to Claim 15, characterised in that the condensate volume per unit time to be generated is determined from a specified decomposition rate of, for example, 20%.

## Revendications

1. Procédé de compostage, dans lequel la matière à décomposer est biologiquement dégradée sous amenée d'air dans un conteneur fermé, une partie au moins de l'air d'échappement étant ramenée à la matière à décomposer, caractérisé en ce que

   le procédé est commandé de manière à ce que l'humidité relative dans la matière à décomposer est maintenue entre une valeur limite inférieure et une valeur limite supérieure,

   la valeur $a_w$ (= pression partielle de la vapeur d'eau dans l'air/pression partielle de la vapeur d'eau dans l'air à l'état de saturation) dans la matière à décomposer pendant la dégradation des matières biologiquement faciles à dégrader est supérieure à 0,85 et inférieure à 1.

2. Procédé selon la revendication 1, caractérisé en ce que la valeur $a_w$ après dégradation des matières biologiquement faciles à dégrader est supérieure à 0,65 et inférieure à 0,85.

3. Procédé selon les revendications 1 ou 2, caractérisé en ce que l'air d'échappement est refroidi et que la vapeur d'eau qu'il contient est du moins en partie séparée par condensation.

4. Procédé selon l'une quelconque des revendications précédentes, caractérisé en ce que de l'oxygène pur est mélangé à l'air d'admission.

5. Procédé selon l'une quelconque des revendications précédentes, caractérisé en ce que de l'air frais est mélangé à l'air d'admission.

6. Procédé selon l'une quelconque des revendications précédentes, caractérisé en ce que la quantité de l'air amené par unité de temps est réglée de manière à ce que l'humidité relative dans la matière à décomposer est maintenue à l'intérieur des valeurs limites indiquées dans la revendication 1 et le cas échéant dans la revendication 2.

7. Procédé selon l'une quelconque des revendications précédentes, caractérisé en ce que l'enthalpie de l'air d'admission est réglée de manière à ce que l'humidité relative dans la matière à décomposer est maintenue à l'intérieur des valeurs limites indiquées dans la revendication 1 et le cas échéant dans la revendication 2.

8. Procédé selon l'une quelconque des revendications précédentes, caractérisé en ce que la valeur $a_w$ est réglée aussi grande que possible à l'intérieur des limites indiquées.

9. Procédé selon l'une quelconque des revendications précédentes, caractérisé en ce que l'humidité relative dans la matière à décomposer est maintenue à une valeur constante.

10. Procédé selon l'une quelconque des revendications précédentes, caractérisé en ce que le rapport entre la quantité d'air ambiant ramené par unité de temps à la matière à décomposer et la quantité d'air frais amené par unité de temps à la matière à décomposer et/ou la quantité d'oxygène pur amené par unité de temps à la matière à décomposer est supérieure à 1 et se situe de préférence entre 6 et 28.

11. Procédé selon l'une quelconque des revendications précédentes, caractérisé en ce que le $CO_2$ contenu dans l'air d'échappement est, soit entièrement, soit partiellement soustrait de l'air d'échappement avant le réacheminement intégral ou partiel de celui-ci dans la matière à décomposer.

12. Procédé selon l'une quelconque des revendications précédentes, caractérisé en ce que la quantité d'eau qui est formée microbiologiquement lors du compostage est déterminée, et que la quantité d'eau ainsi déterminée est utilisée pour la commande et/ou le réglage du procédé de compostage.

13. Procédé selon la revendication 12, caractérisé en ce que la teneur en eau et l'enthalpie dans l'air d'admission et dans l'air d'échappement sont mesurées ou déterminées et que la quantité de l'eau microbiologiquement formée dans le conteneur en est dérivée.

14. Procédé selon les revendications 12 ou 13, caractérisé en ce que la perte de poids de la matière à décomposer est mesurée ou déterminée.

15. Procédé selon l'une quelconque des revendications 3 à 14, caractérisé en ce que la puissance de refroidissement et/ou la puissance de ventilation sont réglées de manière à ce qu'une quantité déterminée de condensat est produite par unité de temps.

16. Procédé selon la revendication 15, caractérisé en ce que la quantité de condensat à produire par unité de temps est déterminée à partir d'un taux de dégradation prédéterminé de par exemple 20 %.

$CO_2$     $H_2O$

~2

1

$O_2$

3     3

FIG. 1

# Fig. 2

1. Rottedurchgang

2. Rottedurchgang
(entfallen)

$FM_A = 34.004$

$TS_A = 17.500$

$\Delta M = 34.004 - 17.500 = 16.504\,kg$

$17.500 = FM_E$

$14.150 = TS_E$

$\Delta TS = 3.450\,kg = 3.066\,kgO_2 + 379\,kgH = H_2O$

[kg] 40.000 30.000 20.000 10.000

Zeit [d]

1 2 3 4 5 6 7 8 9 10 11 12 13 14

28./29.6.  6.7.93

EP 0 647 604 B1

# Fig. 3

$$\eta_C = \frac{L}{Q} = \frac{T - T_0}{T}$$

$Q$ = Wasserbildungsenergie

$Q_0$ = Verdunstungsenergie

$Q = 57 \text{ kcal/mol} \rightarrow 3.166,7 \text{ kcal/kg } H_2O$

$Q_0 = 52,3 \text{ kcal/mol} \rightarrow 2.905,6 \text{ kcal/kg } H_2O$

# Fig. 4

$$\varepsilon_C = \frac{Q}{L} = \frac{T}{T - T_0}$$

$$Q = Q_0 - L$$

$Q$ = Kondensationsenergie

$Q_0$ = Verdunstungsenergie

$Q_0 = 2.905,6 \text{ kcal/kg } H_2O$

$Q = 585,5 \text{ kcal/kg } H_2O$

$$\varepsilon_C = \frac{2.905,6}{585,5} = 4,963$$